# DEMANDE DE BREVET EUROPEEN

(11) **EP 0 942 557 A1**
(43) Date de publication de la demande: **15.09.1999**
(21) Numéro de dépôt: 98400599.1
(22) Date de dépôt: 13.03.1998
(51) Int. Cl.: H04L 12/56

(54) **Méthode de multiplexage pour système de communication de type ATM**

(71) Demandeur: PCE, 75013 Paris (FR)
(72) Inventeur: Gauthier, Jean-Pierre, 78350 Jouy En Josas (FR)
(74) Mandataire: Chameroy, Claude

(57) **Abrégé**

Système de communication formé d'au moins un réseau de télécommunications qui transmet des paquets d'un point d'accès à un autre, ledit point d'accès étant doté :
- d'une pluralité de bornes d'accès pour recevoir des flux de données de débits et de natures variés en provenance de services utilisateurs variés,
- de moyens pour former des paquets à partir desdits flux de données,
- de moyens de multiplexage pour multiplexer les paquets résultant des différents flux de données,
- d'au moins une borne de sortie pour émettre sur ledit réseau les paquets délivrés par lesdits moyens de multiplexage.
Lesdits moyens de multiplexage comportent ;
- des moyens pour ordonner les paquets résultant de chaque flux de données selon un critère de débit garanti / débit non garanti pour le service utilisateur correspondant,
- des moyens pour regrouper les services à débits garantis dans un ensemble auquel une priorité est attribuée,
- des moyens pour regrouper, en fonction de leur nature, les services à débits non garantis dans un ou plusieurs ensembles de priorités distinctes,
- des moyens pour multiplexer les paquets en fonction desdites priorités.

## Description

### 1. Généralités

La technique ATM (Asynchronous Transfer Mode) permet la transmission sur un même support de données de différentes nature (son; image, fichiers etc...) Ces données sont rangées dans des paquets appelés "cellules" d'une longueur normalisée de 53 octets. Une adresse contenue dans l'entête et composée de deux champs, le VPI (Virtual Path Identifier) et le VCI (Virtual Channel Identifier) assure le routage des cellules au sein du réseau ATM. Une succession de cellules ATM pour le même VPI et le même VCI constitue un canal virtuel VC ou connexion.

L'ATM Forum et l'ITU ont récemment classifié les différents types de services et ont normalisé des profils de trafic supportant ces services. Ces profils vont être à la base de contrats entre exploitants et usagers. La qualité de service, essentielle en ATM, est quantifiée par les paramètres du profil de trafic. On peut souligner que ces organismes se bornent à décrire les types de services sans préconiser de méthodes de multiplexage telles que la qualité de service soit respectée simultanément sur toutes les connexions.

Les phénomènes de congestion, omniprésents en ATM tendent à altérer la qualité de service. Ils interviennent dès lors que la capacité d'écoulement en sortie est insuffisante pour absorber les flux entrants de cellules. Des files d'attente se forment alors et induisent des temps de traversée significatifs et pénalisants.

Les équipements de multiplexage et de commutation ATM doivent donc maîtriser ces files d'attente pour assurer la qualité de service. Une telle exigence a un impact important sur l'architecture des équipements.

### 2. Etat de l'art

L'ATM Forum et l'ITU ont défini différents types de trafic: CBR (Constant Bit Rate), VBR (Variable Bit Rate), ABR (Available Bit Rate), ABT (available Block Transfer) [ref : ITU I.371]. Cette liste est non limitative et d'autres types ont déjà été proposes.

La conformité à un type de trafic, peut être établie en soumettant le flux de données à un dispositif appelé "police". La police vérifie l'acceptation de chaque cellule en fonction du type de trafic et de ses paramètres. Un flux est conforme si toutes les cellules sont acceptées. La connaissance et le respect du profil de trafic de chacune des sources permettent de mieux maîtriser les phénomènes de congestion dans le réseau ATM. La police est donc souvent utilisée à l'entrée des réseaux ATM. Les cellules non conformes sont simplement supprimées. Cette mesure répressive protège certes le réseau mais a des conséquences très néfastes sur la qualité de service des sources non conformes!

Les sources CBR ont l'avantage de ne pas provoquer de congestion dans les réseaux, en effet les cellules sont toujours régulièrement espacées dans le temps, les rafales sont donc inexistantes. Elles sont préconisées pour supporter des flux temps-réel comme la voix ou la vidéo et émuler des "connexions" virtuels transitant habituellement sur le réseau téléphonique commuté. Le réservation de débit (appelé PCR: Peak Cell Rate) dans le réseau d'une connexion CBR est constante. L'intérêt de l'ATM pour transporter uniquement de tels flux est limité au regard d'autres réseaux non-ATM.

Les sources VBR ont en plus la possibilité d'émettre des rafales de données. Celles-ci sont toutefois limitées en taille. Ce mode a l'intérêt de rendre plus attrayante la compression de données et permet de faire du multiplexage statistique. La réservation de débit dans le réseau d'une connexion VBR est normalement la valeur moyenne du débit de la source (valeur appelée SCR: Sustainable Cell Rate). Le débit maximal est appelé PCR Peak Cell Rate et ne peut intervenir que lors de rafales limitées à MBS (Maximum Burst Size) cellules. Dans un commutateur ATM, la somme des débits maximum entrants est habituellement supérieure au débit de sortie, de sorte que la congestion dans le commutateur demeure possible. De part sa nature asynchrone, l'ATM est intéressant pour transporter de tels flux.

Contrairement au CBR et au VBR fonctionnant en "boucle ouverte", l'ABR tient compte de l'état du réseau pour ajuster ses paramètres de trafic. Des cellules particulières dites "RM" (Resource Management) transitent jusqu'à la destination et reviennent à la source pour informer celle-ci sur la congestion rencontrée dans le réseau. Une congestion entraîne bien sur une diminution du débit courant autorisé (appelé ACR Allowed Cell Rate). Cette diminution est possible jusqu'à un niveau minimum (appelé MCR Minimum Cell Rate). Le débit ACR est limité sur sa borne supérieure par le PCR (Peak Cell Rate). L'ACR évolue donc dynamiquement en fonction de la charge du réseau entre son MCR et son PCR. La somme des débits PCR est habituellement supérieure au debit d'écoulement, par contre, la somme des ACR est maintenue dynamiquement égale à la capacité d'écoulement dans le réseau. La congestion dans le réseau est limitée et transitoire et reflète la qualité de l'asservissement des boucles ABR.

La plupart des commutateurs ATM actuels utilisent une technique simple appelée "Priority queuing" ou "Class queuing". Elle consiste à rassembler les connexions en fonction de leur type pour leur faire partager une même file d'attente. Ces files d'attente possèdent une priorité spécifique qui va déterminer celle à servir en premier. Habituellement, la file contenant les flux CBR est servie en premier, la file contenant les ABR en dernier. Ce principe est utilisé dans les commutateurs à matrices.

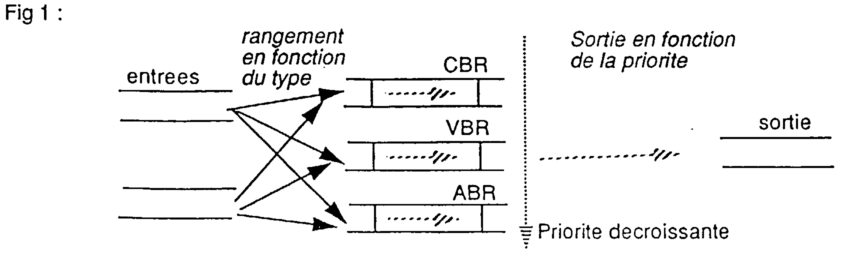

Cette technique a plusieurs inconvénients:
- Elle affecte une priorité absolue d'un type sur un autre.
- elle néglige les interactions entre flux de même type en ayant une stratégie trop simple de FIFO (First-In First-out)

A l'état de l'art, une méthode plus complexe consiste à affecter une file d'attente par connexion (VC queuing). En sortie, le principe élection de la file d'attente à servir, appelé discipline de service, peut être beaucoup plus sophistiqué que dans le cas précédent. L'article "*Service Disciplines for guaranteed performance service in Packet*-*Switching Networks. By HUI ZHANG. Proceedings of the IEEE Vol 83, N 10 October 1995*" donne une idée de l'ensemble des méthodes utilisables. A noter que "l'état non vide" d'une file d'attente est couplée avec une variable liée au temps (comme une date maximale d'émission ou une date minimale d'émission) pour réaliser la discipline de service.

La discipline de service peut être de type 1) "work conserving" ou 2) "non work conserving".
1) Dans le premier cas, une cellule en file d'attente ne peut pas rester bloquée si la sortie est inoccupée (exemple: date maximale d'émission *sans date minimale* d'émission). Une telle méthode est utilisable dans les réseaux ATM: elle ordonnance des flux entre eux mais n'espace pas les cellules d'un même flux.
2) Dans le second cas, une cellule en file d'attente peut rester bloquée même si la sortie est inoccupée. (exemple: date minimale d'émission *avec impossibilité de sortir "avant").* Une telle méthode est utilisable à l'accès et dans les réseaux ATM: Elle est capable d'effectuer un espacement (ou lissage) entre cellules de manière à mettre un flux en conformité avec un profil de trafic particulier.

Les brevets Philips 94.07.664, 95.12.582 décrivent de tels mécanismes. Voir les articles: "*A service architecture for ATM: From Applications to scheduling. M.W. Garrett, Bellcore. IEEE networks May/June 1996*" ou "*A real-time sorter with application to ATM traffic control. J. Roberts, P Boyer, M.J. Servel, CNET France Telecom*".

Ce procédé convient bien à la gestion de connexion ayant un profil de trafic commun (même si les paramètres sont différents) mais semble limité dans un environnement ou les types de trafic CBR, VBR, ABR etc... sont mélangés. Ainsi des rafales de données sur les connexions VBR peuvent perturber le trafic CBR considéré comme plus prioritaire.

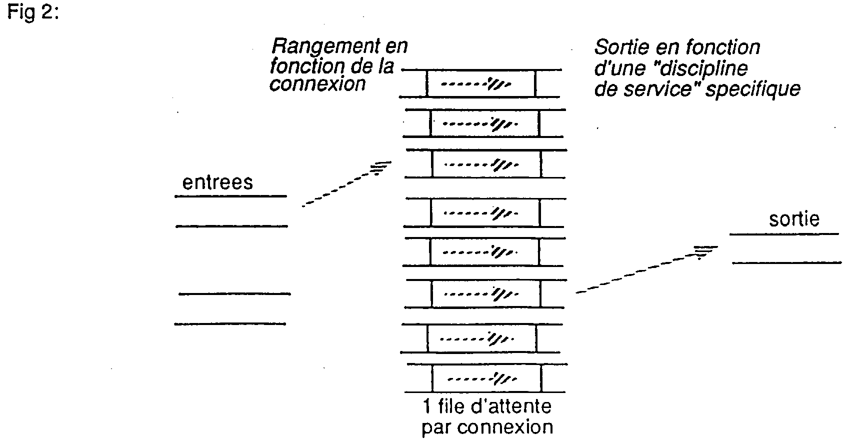

Le brevet Philips 95.03.693 fait la synthèse du "Class Queuing" et du "VC queuing" à savoir que les connexions ont leur file d'attente propre et se trouvent regroupées par type de service appelé "Classe". Les classes de services ont une priorité relative entre elles et possèdent leur propre discipline de service. Le séquencement est le suivant: On sélectionne d'abord la classe la plus prioritaire et donc un ensemble de connexions. Ensuite on choisit la connexion (VC) dans cet ensemble en fonction d'une discipline de service donnée.

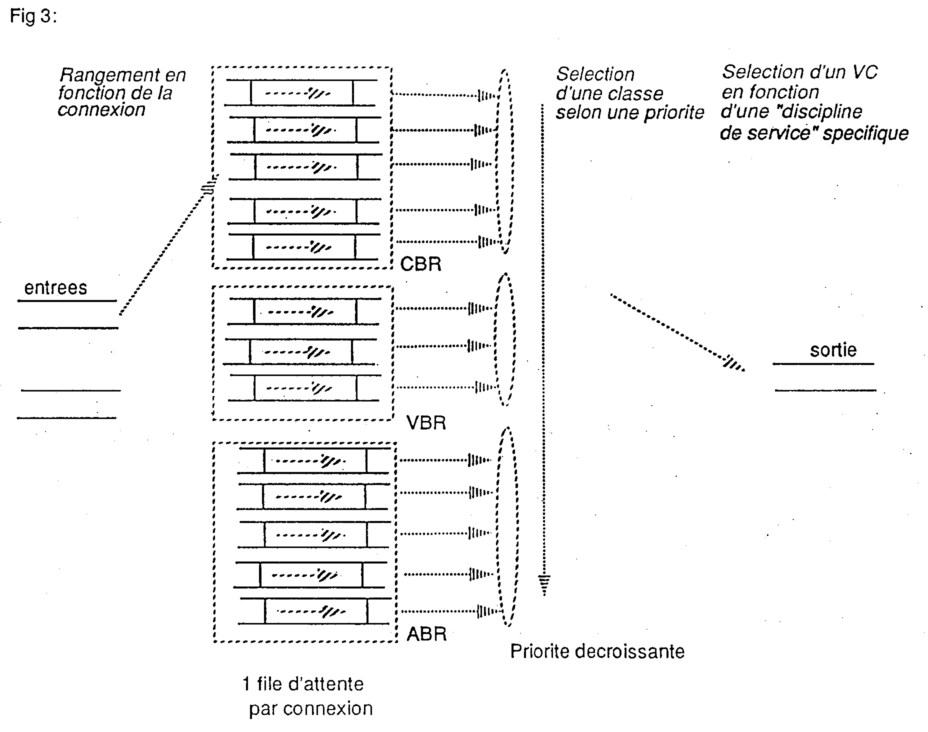

On constate ici que le phénomène présent sur le mécanisme précédent a disparu: Les rafales de données sur les connexions VBR ne peuvent plus perturber le trafic CBR.

### 3. Problème résolu

Il apparait qu'il est limitatif d'accorder une priorité entre classes de services: En considérant des priorités décroissantes notées '0' à 'n', l'ensemble des connexions appartenant à la priorité 'i' se trouve très sensible à l'activite présente sur les priorités '0' à 'i'-1. Si la somme des débits accordés aux connexions présentes sur ces priorités 'o' à 'i'-1 est égale ou supérieure au débit de sortie, cas habituel en multiplexage statistique, les connexions présentes sur les priorités 'i' à 'n' sont simplement "stoppées" et ont donc un débit garanti nul. La qualité de service résultante est donc très médiocre.

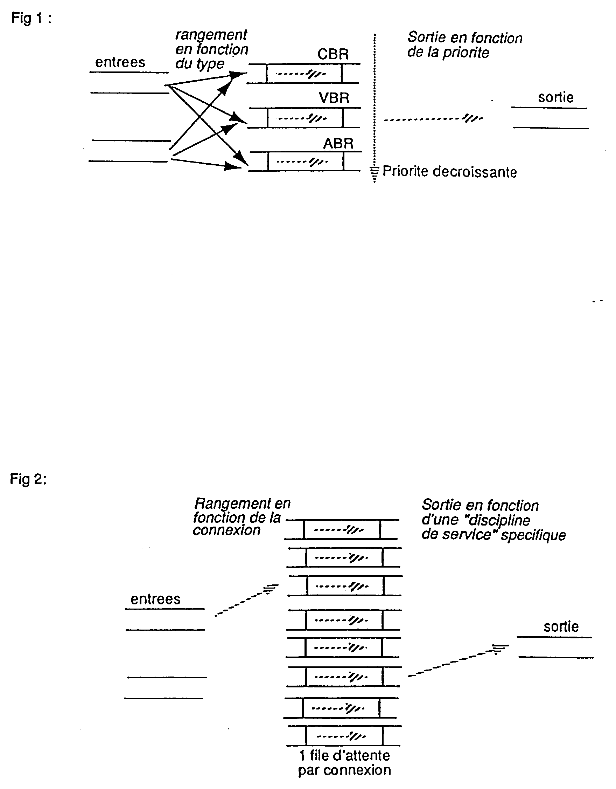

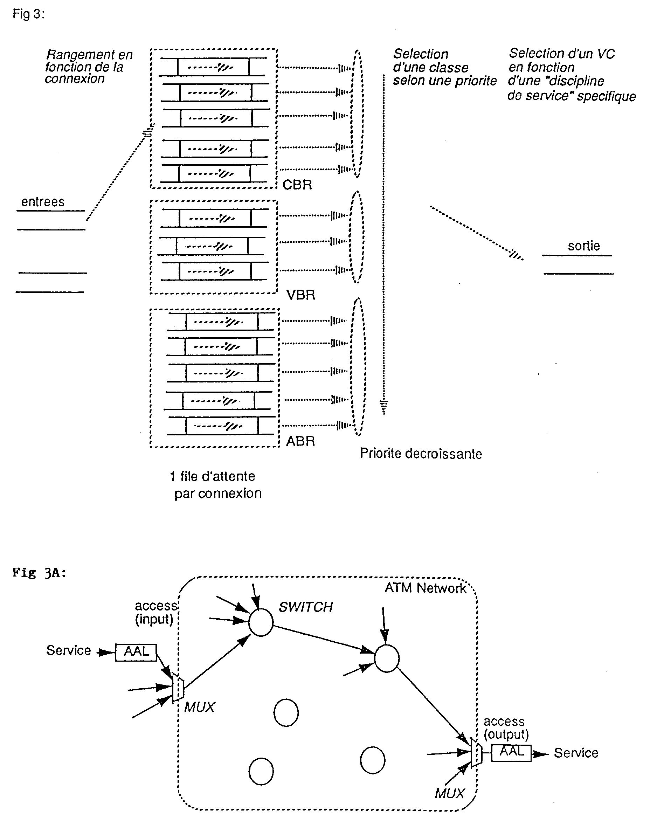

L'utilisation de discipline de service 'non work conserving' opérant un lissage limite cette interaction mais demeure sans intérêt si un multiplexage statistique est effectue entre connexions appartenant aux priorités '0' à 'i'-1. Par exemple, on reprenant le schéma présente figure 3, on constate que les débits MCR des flux ABR ne peuvent être garantis si un multiplexage statistique est effectue sur les VBR.

Le dispositif est utilisable à chaque lieu de congestion, c'est à dire à l'accès, dans le réseau, et la sortie de réseau.

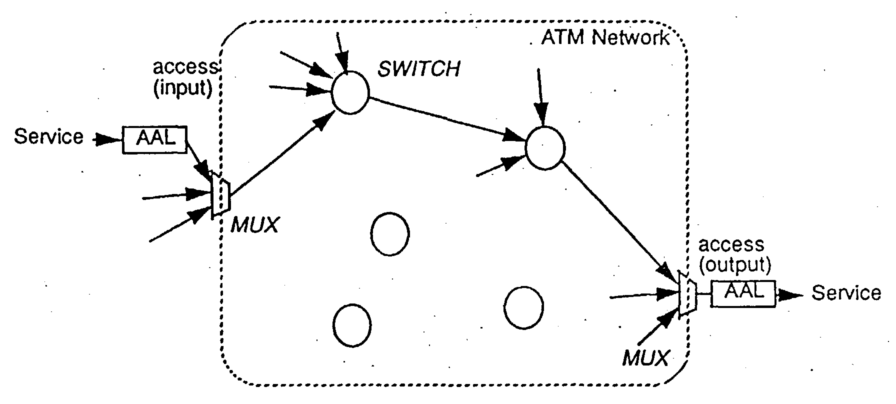

Le débit traversant les commutateurs (switchs) du réseau peut être très important. Des matrices d'interconnexions sont alors utilisées. A l'intérieur de celles-ci, la technique de "Priority Queuing" (ou "Class Queuing") résout les problèmes liés à la qualité de service avec les inconvénients qui viennent d'être évoqués. Le présent dispositif supprime ces inconvénients.

### 4. Solution trouvée

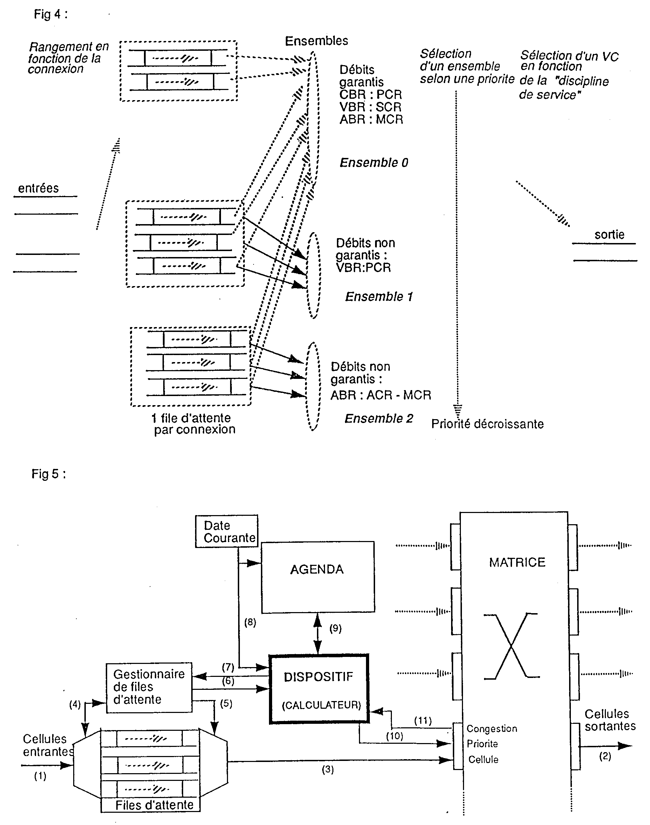

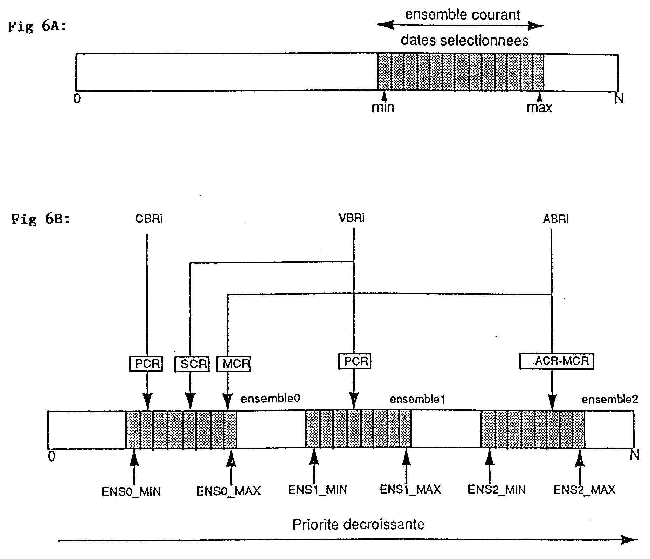

**-1-** Selon une première caractéristique de invention, une séparation est faite entre les "débits garantis" et les "débits non garantis". Les débits garantis sont rangés dans un ensemble commun indépendamment des types de services. Par contre, les débits non garantis peuvent être regroupes dans des ensembles distincts selon leurs types et se voir affecter des priorités relatives. Il en découle qu'une connexion n'intégre plus un ensemble mais deux. (voir Fig 4)
   En pratique ces ensembles contiennent des dates mises à jour en fonction des paramètres du profil de trafic associé.*
   Par débits garantis, on entend assurer le maintien , pour chaque profil, le paramètre suivant:
   - CBR : PCR (Peak cell Rate)
   - VBR : SCR (Sustainable Cell Rate)
   - ABR : MCR ( Minimum Cell Rate)

   Par débits non garantis, on entend assurer maintien, pour chaque profil:
   - CBR : -
   - VBR : PCR ( Peak Cell Rate)
   - ABR : ACR - MCR ( Allowed Cell Rate - Minimum Cell rate)

   Le même principe est, bien entendu, applicable sur des profils de trafic à venir.
**-2-** Selon une deuxième caractéristique de invention et en phase de recherche, l'ensemble des "débits garantis" est consulté en premier La discipline de service dans cet ensemble est de type "non work conserving":
   - Ainsi en cas d' égibilité d'au moins une date (et donc d'une connexion), la plus prioritaire est choisie, pour constituer le résultat du dispositif.
   - Ainsi en cas de non-égibilité d'au moins une date, les ensembles des "débits non garantis" sont alors considérés successivement par priorités décroissantes: En cas d' égibilité d'au moins une date , la plus prioritaire est choisie sur l'ensemble courant pour constituer le résultat du dispositif. En cas de non-égibilité, la même mesure est appliquée à nouveau sur l'ensemble de priorité intérieure.

   La discipline de service sur les ensembles à "débits non garantis" est moins critique et peut dépendre de la faculté du système à opérer un lissage nécessaire à la mise en conformité à un profil de trafic donné.
**-3-** D'autre part, cette solution peut substantiellement améliorer la qualité de service des matrices de commutation largement utilisées en ATM. Le dispositif est alors place en entrée de matrice. Le couplage est décrit plus loin et fait partie de l'invention.

**L'ATM Forum et l''ITU dans I.371 ont fourni l' algorithme de conformité à utiliser dans le dispositif de police pour chaque profil de trafic. Les dispositifs de police et d'espacement sont en vis à vis dans un réseau ATM. L'equipement doté d'un espaceur émet des flux qui doivent etre considérés comme conformes par la police intégrée dans l'équipement de réception.*
*Le dispositif décrit ici a cette capacité d'espacement et "s'inspire" les algorithmes de police pour calculer les dates théoriques d'émission. Une date théorique d'arrivée (TAT : Theorical Arrival Time) de la police est "vue" comme une date théorique d'émission par l'espaceur (noté ici DTE). La comparaison de ces dates avec la date courante constitue le critère d'éligibilité des connexions pour l'espaceur.*

Dans cette utilisation précise et selon une troisième caractéristique de invention, le dispositif prend dynamiquement en compte la congestion présente dans la matrice pour invalider des ensembles. D'autre part, le dispositif fournit des cellules associées à une priorité évaluée dynamiquement selon un mode qui sera vu plus loin. Il en résulte qu'une connexion n'est plus associée à une priorité comme auparavant mais deux. La matrice est censée maintenir le séquencement des cellules d'un même flux malgré les différentes priorités portées par les cellules de ce flux.

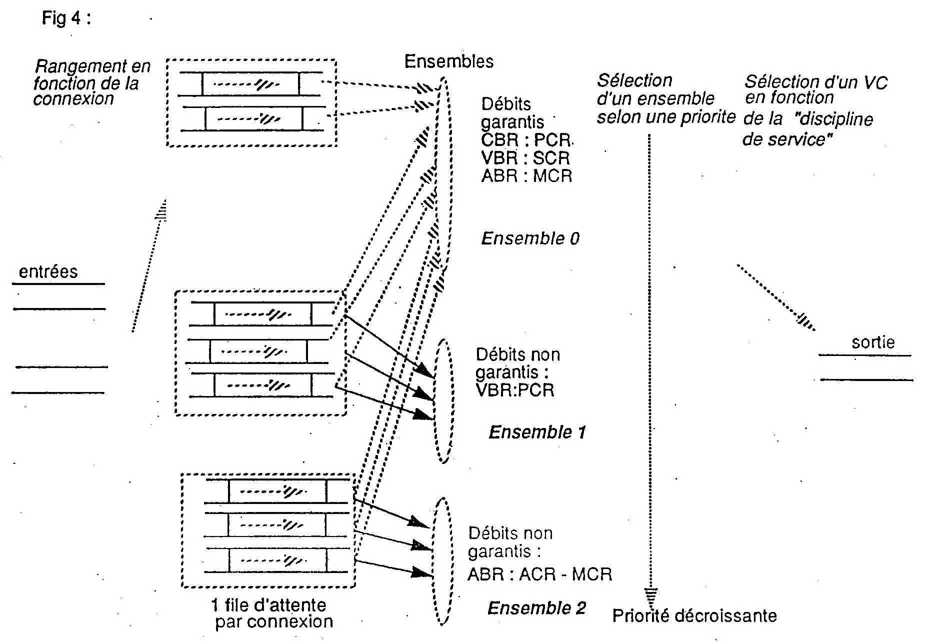

### 5. Dispositif

### 5.1. Environnement

L'environnement du dispositif est donné fig 5. Chaque connexion (ou flux) possède sa propre file d'attente. Le gestionnaire de files d'attente gère les files d'attente dans un banc mémoire. Un identificateur de connexion est accordé en fonction de l'entête de la cellule ATM.

Les cellules entrantes arrivent par (1) et sont rangées en fonction de leur identificateur de connexion dans leur file de destination. Le gestionnaire de files d'attente organise les opérations sur les files. A chaque cellule entrante, il émet une "notification" porteuse de l'identificateur de connexion vers le dispositif (calculateur) sur le lien (6).

Le dispositif reçoit les notifications et met à jour les dates théoriques d'émission associées.

A chaque temps cellule (Tc), définit par le débit du lien (6). Le disposition opère une élection pour savoir quelle connexion servir. Il agit en fonction de:
-1-La présence de cellules dans les files,
-2-la valeur des dates theoriques d'émission rangées le bloc AGENDA et accessibles par (9)
-3- la date courante lue via le lien (8),
-4- L'information de congestion retournée par la matrice via le lien (11). Elle est notée CONG[2:0]. CONG[x]=1 signifiant qu'une congestion est présente sur la priorité 'x'.

Le résultat du dispositif est constitué par l'identificateur de la connexion élue. Le résultat est envoyé vers le gestionnaire de file d'attente sur le lien (7). Ce dernier extrait la cellule en tête de la file d'attente désignée par l'identificateur et l'émet sur (3): Simultanément, le dispositif émet la priorité de la cellule sur le lien (11).

La matrice reçoit la cellule avec sa priorité pour la ranger dans son buffer cellule interne dont la structure n'est pas détaillée ici. Une information de congestion du buffer est retournée vers le dispositif va le lien (11). Cette information peut être simple (sature/non sature) ou plus complexe ([état sature/non sature] / par priorité / par entrée/ par sortie / par'etat du buffer'). La qualité de multiplexage dépend bien sur de richesse de cette information. On considère ici simplement que la matrice renvoie une information de congestion sur chaque niveau priorité. La fonction principale de la matrice est de diriger, en fonction de leur entête, les cellules entrantes par les ports d'entrées vers leurs ports de destinations. La structure du buffer cellule de la matrice n'est pas détaillée ici et peut être plus ou moins complexe. De nombreuses études existent sur ce sujet.

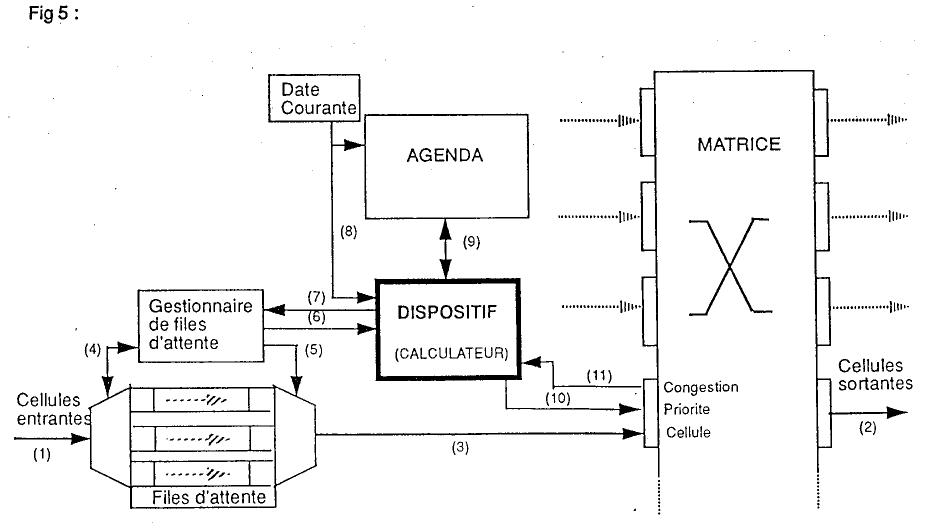

Le calculateur interagit au travers de primitives avec le bloc AGENDA. Ce dernier tient lieu de "serveur" et possède les caractéristiques suivantes:
-1- AGENDA doit pouvoir affirmer si au moins une date théorique d'émission est passée. Ceci dans un sous-ensemble des dates traitées appelé "ensemble courant".
   Cette opération sera notée date = Presence_date_passee() dans ce document.
-2- Il doit également pouvoir intégrer de nouvelles dates très rapidement et ce quel que soit l'ensemble courant.
   Cette opération sera notée Inserer(identificateur,valeur)
-3- il doit fournir rapidement l'identificateur de la date passée optimale (contenue dans l'ensemble courant).
   Par "optimale" on entend la chose suivante: si plusieurs dates sont passées, la date optimale est celle qui est associée au débit le plus élevé. Cette méthode est appelée "Rate Monotonic" et garantit un débit de façon déterministe*.
   Cependant dans un environnement statistique, Il peut être souhaitable d'établir une priorité tournante pour permettre un partage équitable de la bande passante: La recherche est donc enrichie d'un paramétre 'tournant' précisant le type de recherche (priorité fixe ou tournante).
   Les contraintes temps-réels étant réduites lorsque le mode "tournant" est établi, AGENDA peut utiliser une méthode spécifique pour répartir équitablement la bande passante entre connexions.
   Cette opération sera notée adresse = Rechercher(tournant)
-4- La sélection d'un nouvel ensemble doit être possible et rapide. Il devient ainsi l'ensemble courant. Cette opération sera notée Selecter(ensemble).

**Les dates sont classées en fonction des débits auxquels elles sont liées selon un ordre de priorité. A chaque mission de cellule sur une connexion, la date théorique d'émission est incrementee de la période. La période représente l'inverse du débit et l'espacement nominal entre deux cellules d'un même flux.*
*Au débit le plus élevé correspond la date la plus prioritaire.*
*A chaque temps cellule, la date élue est celle qui:*
*- est passée (intérieure ou égale à la date courante)*
*- est classée comme plus prioritaire parmi toutes les dates passées.*
*Cette méthode est appelée "Rate Monotonic". Voir: "Scheduling algorithms for multiprogramming in a real-time environment". Liu & Leyland, Journal of the ACM, vol 20, Jan 73. et "Rate controlled static priority queuing", Zhang, D. Ferrari. Proceedings of the IEEE Infocom 93 April 93".*

### 5.2. Mise en oeuvre du brevet 95.03.693 dans le dispositif

Le bloc AGENDA ne fait pas partie intégrante du dispositif à breveter. Il peut néanmoins poser une difficulté technologique. Un tel dispositif a été décrit dans le brevet 95.03.693 où il porte la préférence "400". Les primitives d'accès à l'AGENDA décrites ci-dessus ne posent pas de problème d'adaptation à ce dispositif. (D'autres dispositifs sont également envisageables).

Ce brevet fait appel à une structure d'arbre. Une date est repérée par une adresse (ou identificateur) dans un espace linéaire indice '0' à 'N'. Ce dernier intègre l'ensemble des dates traitées par le dispositif.

L'opération Selecter_arbre(min,max) sélectionne les dates dont l'adresse ou identificateur est contenue entre 'min' et 'max'. Les valeurs 'min' et 'max' sont bien entendu elles-mêmes contenues entre '0' et 'N'. La primitive de l'AGENDA Selecter(ensemble) sera donc traduite par Selecter_arbre(min[ensemble],max[ensemble]) ou min[] et max[] sont deux tableaux indexés par 'ensemble'.

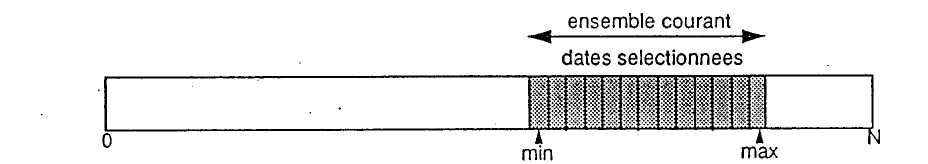

La figure ci dessous représente les ensembles de la fig 4 disposes sur un espace linéaire.

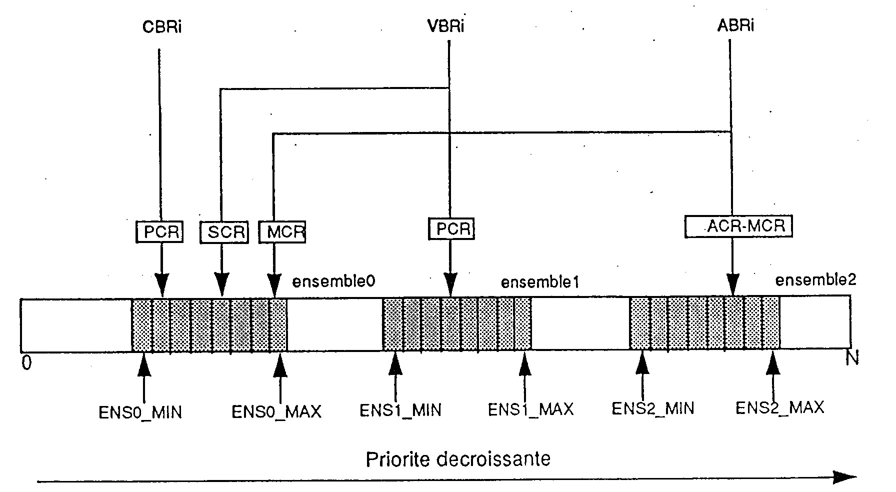

### 5.3. Structure de données

La structure générique nommée "connexion" contient les differents paramètres d'une connexion. Elle est rem

**Tableau 1**

| **Structure "connexion"** | |
|---|---|
| Nom | Utilisation |
| TYPE | CBR / VBR / ABR |
| ID0 | Identificateur de la Date théorique d'émission 0(DTE0) |
| PERIODE0 | Période "Leaky bucket" 0 ( PERIODE0 = 1 / Débit garanti) |
| PROFONDEUR0 | profondeur "Leaky bucket" 0 |
| DTE0 | Date théorique d'émission 0 |
| IDX | Identificateur de la Date théorique d'émission X(DTEX) |
| PERIODEX | Période "Leaky bucket" X ( PERIODEX = 1 / Débit non garanti) |
| PROFONDEURX | profondeur "Leaky bucket" X |
| DTEX | Date théorique d'émission X |
| Compteur_cell | Compteur de cellule de la connexion |

plie différemment en fonction du type de profil :

### 1) Cas du CBR :

PERIODE0 contient la période du flux PCR de la connexion.

### 2) Cas du VBR :

PERIODE0 contient la période du flux SCR de la connexion. PROFONDEUR0 représente la profondeur du "leaky bucket" soit MBS * PERIODE0. MBS étant le "Maximum Burst Size".

PERIODEX contient la période du flux PCR de la connexion. PROFONDEURX représente la profondeur du "leaky bucket"

### 3) Cas de l'ABR :

PERIODE0 contient la période du flux MCR de la connexion. PROFONDEUR0 représente la profondeur du "leaky bucket" soit MBS * PERIODE0. Normalement PROFONDEUR0 =0.

PERIODEX contient la période du flux ACR-MCR de la connexion, c'est á dire le débit courant diminué du Minimum Cell Rate. PROFONDEURX représente la profondeur du "leaky bucket".

Le dispositif dispose d'un tableau de descripteurs "Connexion" noté connexion[]. Ce tableau est indexée par un l'identificateur de connexion.

### 5.3.1. Id_vers_Ic[]

Le dispositif dispose d'un tableau Id_vers_Ic[] indexé par un identificateur de date permettant de retrouver la connexion associée á cette date.

### 5.4. Traitement

Le traitement est effectué par deux processus indépendants: Processus d'entrée et sortie.

Le processus d'entrée est déclenche à chaque réception de notification sur le lien (6), tandis que le processus de sortie est déclenche périodiquement à chaque temps cellule Tc.

En ABR, le traitement des cellules RM "resource Management" n'a pas été décrit pour ne pas alourdir l'algorithme. Ce traitement consiste en l'émission périodique et la réception de cellules RM entraînant la modification du débit (ACR-MCR) présent dans connexion[i].DTEX.

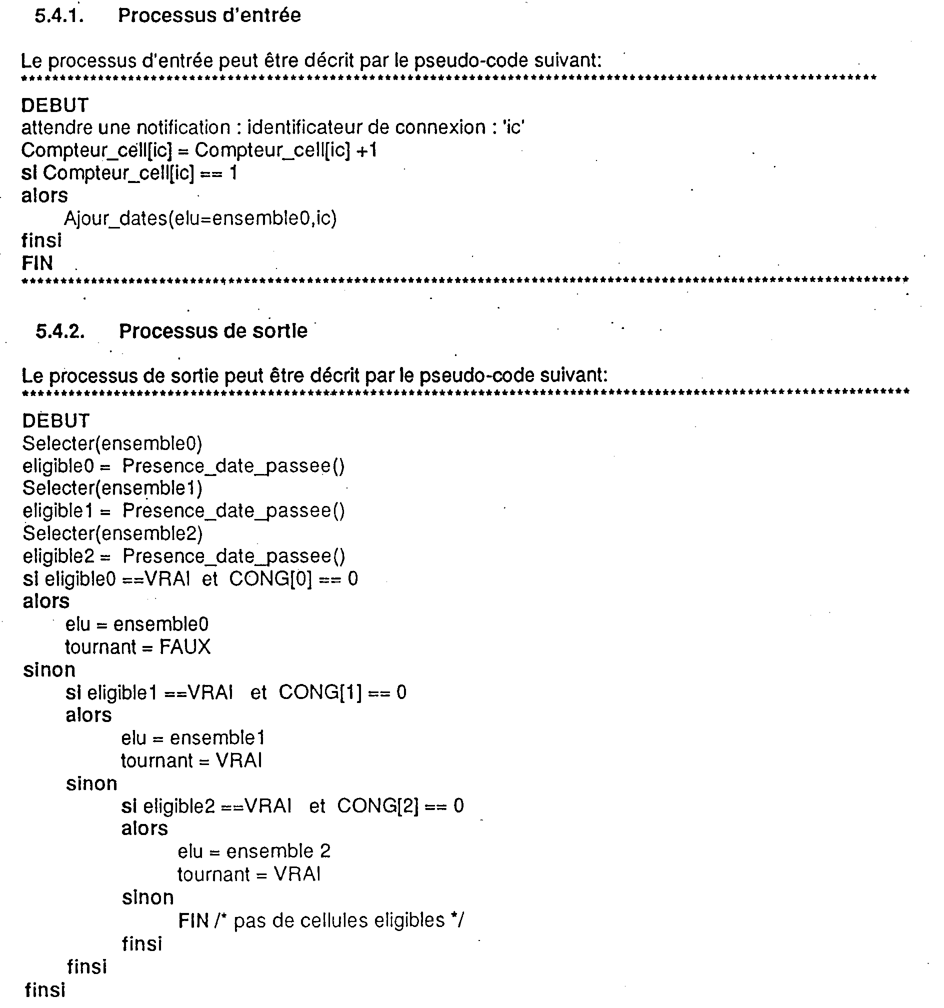

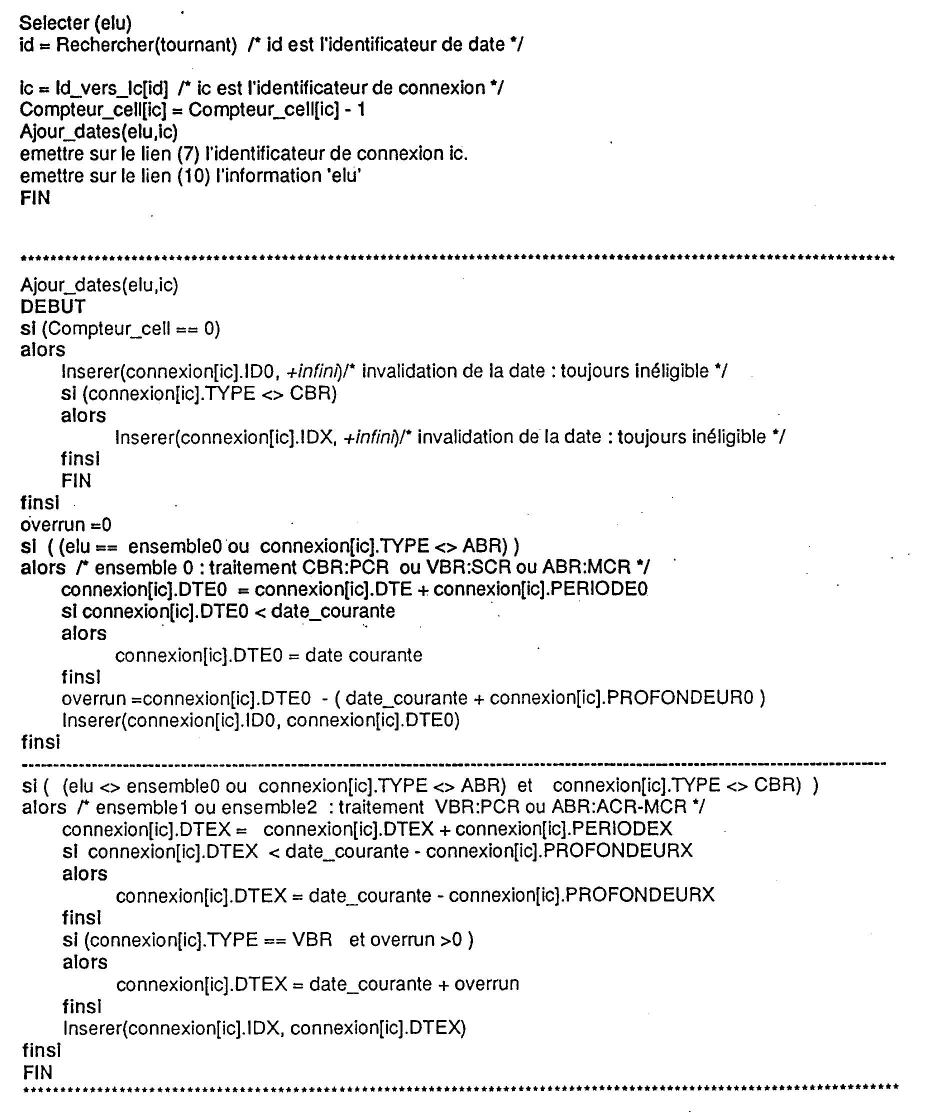

## Revendications

1. Système de communication formé d'au moins un réseau de télécommunications qui transmet des paquets d'un point d'accès à un autre, ledit point d'accès étant doté:
- d'une pluralité de bornes d'accès pour recevoir des flux de données de débits et de natures variés en provenance de services utilisateurs variés,
- de moyens pour former des paquets à partir desdits flux de données,
- de moyens de multiplexage pour multiplexer les paquets résultant des différents flux de données,
- d'au moins une borne de sortie pour émettre sur ledit réseau les paquets délivrés par lesdits moyens de multiplexage,
caractérisé en ce que:
lesdits moyens de multiplexage comportent:
- des moyens pour ordonner les paquets résultant de chaque flux de données selon un critère de débit garanti / débit non garanti pour le service utilisateur correspondant,
- des moyens pour regrouper les services à débits garantis dans un ensemble auquel une priorité est attribuée,
- des moyens pour regrouper, en fonction de leur nature, les services à débits non garantis dans un ou plusieurs ensembles de priorités distinctes,
- des moyens pour multiplexer les paquets en fonction desdites priorités.

2. Système de communication selon la revendication 1, caractérisé en ce que, lesdits paquets comportant au moins un identificateur de destination, lesdits moyens de multiplexage comportent:
- des moyens pour stocker les paquets reçus dans des files d'attente par destination,
- des moyens d'élection d'une destination à l'intérieur d'un ensemble,
- des moyens pour appliquer lesdits moyens d'élection auxdits ensembles, successivement, par ordre de priorité décroissante, tant qu'aucune destination n'a été élue.

3. Système de communication selon l'une des revendications 1 ou 2, caractérisé en ce que l'ensemble de plus grande priorité est l'ensemble qui regroupe les services à débits garantis.

4. Système de communication selon l'une des revendications 2 ou 3, caractérisé en ce que lesdits moyens d'élection sont constitués par des moyens du type des moyens d'arborescence décrits dans la demande de brevet européen n° EP 0 735 793 A1 sous la référence 400.

5. Point d'accès destiné à être utilisé dans un système de communication selon l'une des revendications 1 à 4.

6. Méthode de multiplexage destinée à être utilisée dans un système de communication formé d'au moins un réseau de télécommunications qui transmet des paquets d'un point d'accès à un autre, ledit point d'accès étant doté:
- d'une pluralité de bornes d'accès pour recevoir des flux de données de débits et de natures variés en provenance de services utilisateurs variés,
- de moyens pour former des paquets à partir desdits flux de données,
- de moyens de multiplexage pour multiplexer les paquets résultant des différents flux de données,
- d'au moins une borne de sortie pour émettre sur ledit réseau les paquets délivrés par lesdits moyens de multiplexage,
caractérisé en ce que:
ladite méthode consiste à:
- ordonner les paquets résultant de chaque flux de données selon un critère de débit garanti / débit non garanti pour le service utilisateur correspondant,
- regrouper les services à débits garantis dans un ensemble auquel une priorité est attribuée,
- regrouper, en fonction de leur nature, les services à débits non garantis dans un ou plusieurs ensembles de priorités distinctes,
- multiplexer les paquets en fonction desdites priorités.

7. Méthode de multiplexage selon la revendication 6, caractérisée en ce que, lesdits paquets comportant au moins un identificateur de destination, elle consiste à:
- stocker les paquets reçus dans des files d'attente par destination,
- élire une destination à l'intérieur d'un ensemble, lesdits ensembles étant considérés, successivement, par ordre de priorité décroissante, tant qu'aucune destination n'a été élue.

8. Méthode de multiplexage selon l'une des revendications 6 ou 7, caractérisé en ce que l'ensemble de plus grande priorité est l'ensemble qui regroupe les services à débits garantis.

9. Méthode de multiplexage selon l'une des revendications 7 ou 8, caractérisé en ce que pour élire une destination, elle utilise des moyens du type des moyens d'arborescence décrits dans la demande de brevet européen n° EP 0 735 793 A1 sous la référence 400.
